Europäisches Patentamt

European Patent Office

Office européen des brevets

(19)

(11) Veröffentlichungsnummer : **0 170 989**
B1

# (12) EUROPÄISCHE PATENTSCHRIFT

(45) Veröffentlichungstag der Patentschrift :
28.09.88

(21) Anmeldenummer : 85109298.1

(22) Anmeldetag : 24.07.85

(51) Int. Cl.⁴ : **F 16 H   1/16**, E 05 F 11/50,
E 05 F 15/16

(54) Getriebeanordnung, insbesondere Schneckengetriebeanordnung.

(30) Priorität : 08.08.84 DE 3429249

(43) Veröffentlichungstag der Anmeldung :
12.02.86 Patentblatt 86/07

(45) Bekanntmachung des Hinweises auf die Patenterteilung : 28.09.88 Patentblatt 88/39

(84) Benannte Vertragsstaaten :
DE FR GB IT SE

(56) Entgegenhaltungen :
EP-A- 0 012 250
EP-A- 0 047 593
DE-A- 2 911 024
DE-A- 3 133 652
FR-A- 2 532 983
GB-A- 2 040 389
GB-A- 2 057 627

(73) Patentinhaber : Siemens Aktiengesellschaft Berlin
und München
Wittelsbacherplatz 2
D-8000 München 2 (DE)

(72) Erfinder : Adam, Peter
Allerseeweg 25
D-8706 Höchberg (DE)
Erfinder : Knappe, Wolfram, Dipl.-Ing. (FH)
Talstrasse 45
D-8710 Kitzingen (DE)

## Beschreibung

Die Erfindung bezieht sich auf eine Getriebeanordnung, insbesondere Schneckengetriebeanordnung, gemäß Oberbegriff des Hauptanspruchs ; eine derartige Getriebeanordnung ist aus der FR-A-2 532 983 bekannt.

Bei der durch die FR-A-2 532 983 bekannten Schneckengetriebeanordnung enden die axialen Erstreckungen der ersten und der zweiten Lagerhülse der Mitnehmer-Scheibe jeweils axial vor der radialen Speichenebene des Zahnrades, die einerseits den radial äußeren Zahnkranz und andererseits die radial innere Lagerhülse des Zahnrades verbindet und sich in einer Ebene radial unterhalb des Eingriffspunktes der Schneckenwelle in den Zahnkranz erstreckt.

Bei einer weiterhin bekannten, in einem Kraftfahrzeug-Fensterheberantrieb verwendeten Schneckengetriebeanordnung ist an dem der Abtriebsseite abgewandten Ende der über übliche Sinter-Gleitlager im Getriebegehäuse gelagerten Stahl-Abtriebswelle eine metallene, gesonderte Mitnehmer-Scheibe formschlüssig aufgesteckt und befestigt. Konzentrisch zur Abtriebswelle sind über den Umfang der Mitnehmer-Scheibe axial frei abstehende Zapfen angeformt, die im montierten Zustand der Getriebeanordnung in korrespondierende, über den Umfang des Zahnrades verteilte Taschen eingreifen. Zur Vermeidung von Getriebeschäden, z. B. beim Anlaufen der Scheibe des motorisch angetriebenen Fensterheberantriebs gegen einen Anschlag bei Erreichen der oberen und unteren Endlage sind zusätzlich über die Zapfen Dämpfungspuffer aus elastischem Material gestülpt ; um die dazu notwendige Relativbewegung zwischen Mitnehmer-Scheibe einerseits und Zahnrad andererseits zu ermöglichen, ist das Zahnrad drehbar auf der Abtriebswelle axial zwischen Sinter-Lagern für die eigentliche Gleitlagerung der Abtriebswelle in dem Getriebegehäuse gelagert.

Aufgabe der vorliegenden Erfindung ist es, trotz einer einfachen fertigungs- und montagetechnischen und in Richtung der Abtriebswelle eine nur geringere Bauhöhe ermöglichende Konstruktion eine höhere Betriebssicherheit, insbesondere unter Berücksichtigung langer Einsatzzeiten und hoher betriebsmäßiger Temperaturunterschiede, insbesondere bei Anwendung in einem Kraftfahrzeug-Fensterheberantrieb, gewährleisten zu können.

Die Lösung dieser Aufgabe gelingt bei einer Getriebeanordnung der eingangs genannten Art durch die kennzeichnende Lehre des Anspruchs 1 ; vorteilhafte Ausgestaltungen sind jeweils Gegenstand der Unteransprüche.

Bei der erfindungsgemäßen Getriebeanordnung kann die Bauhöhe der Getriebeanordnung in Richtung der Abtriebswelle wesentlich vermindert werden, wobei gleichzeitig eine belastungstechnisch günstige Lagerung des Zahnrades radial unter dem Eingriffspunkt der Antriebswelle erreicht wird ; selbst wenn wegen der notwendigen Festigkeitsanforderung die Abtriebswelle aus Stahl gefertigt werden muß, können sämtliche übrigen, in einfacher Stecktechnik montierbaren Bauteile aus Kunststoff hergestellt werden und somit aufgrund des nur geringen Stahlanteils und des geringen Durchmesser der Abtriebswelle Belastungen durch übermäßige Wärmeentwicklung von Metallbauteilen vermieden werden. Gleichzeitig ergibt sich eine einfache gußtechnische Herstellung und Steckmontage der einzelnen, mit äußerst geringer Aufbauhöhe zusammensetzbaren Getriebeteile.

Zur Gewährleistung einer besonders festen Mitnahmeverbindung zwischen der Abtriebswelle und der aufgespritzten Mitnehmer Scheibe ist in an sich bekannter Weise nach einer Ausgestaltung der Erfindung vorgesehen, daß die Abtriebswelle im Bereich der ersten Lagerhülse mit axial und/oder tangential verlaufenden Außennuten versehen und dadurch eine zusätzliche formschlüssige Verbindung zwischen dem ausgespritzten Kunststoff der Mitnehmer-Scheibe und der Abtriebswelle gewährleistet ist.

Die Erfindung sowie weitere vorteilhafte Ausgestaltungen werden im folgenden anhand eines schematisch dargestellten Ausführungsbeispiels in der Zeichnung näher erläutert. Darin zeigen :

FIG 1 in einem axialen Längs-Teilschnittbild einen Kraftfahrzeug-Fensterheberantrieb,

FIG 2 einen Schnitt durch das Getriebegehäuse des in FIG 1 dargestellten Kraftfahrzeug-Fensterheberantriebe gemäß der Schnittlinie II-II.

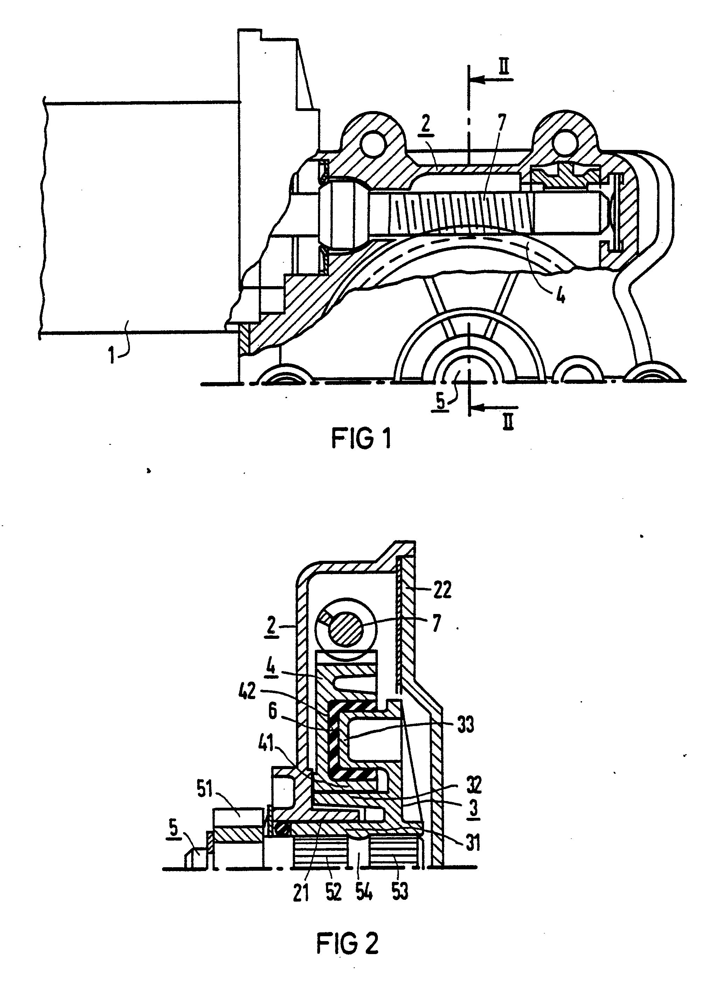

FIG 1 zeigt in einem axialen Längs-Teilschnittbild einen Kraftfahrzeug-Fensterheberantrieb mit einen nur schematisch angedeuteten Gleichstrom-Antriebsmotor 1, dessen verlängerte Läuferwelle als Schnecken-Antriebswelle 7 in ein an das Gehäuse des Gleichstrom Antriebsmotor 1 angeflanschtes Getriebegehäuse 2 ragt und ein Zahnrad 4 antreibt.

In über den Umfang des Zahnrades 4 verteilt angeformte axial offene Taschen 42 greifen korrespondierende Zapfen 33 einer aus Kunststoff hergestellten Mitnehmer-Scheibe 3 ein, die über eine erste Lagerhülse 31 direkt auf eine Abtriebswelle 5 aufgespritzt ist. Zur besseren Mitnahmeverankerung zwischen Mitnehmer-Scheibe 3 einerseits und Abtriebswelle 5 andererseits ist an ihrer oberfläche mit axial verlaufenden Nuten 52, 53 und/oder tangential verlaufenden Nuten 54 versehen. Zwischen den axial vorstehenden Zapfen 33 der Mitnehmer-Scheibe 3 und den axial übergreifenden Taschen 42 sind vor der Montage über die Zapfen 33 gestülpte nutförmige Dämpfungspuffer zwischengefügt.

Die mit einem Abtriebszahnrad 51 versehene Abtriebswelle ist über die angespritzte Lagerhülse 31 in einer konzentrischen Getriebegehäuse-Lagerhülse 41 gleitgelagert. Auf einer zweiten Lagerhülse 32 der Mitnehmer-Scheibe 3 ist das Zahnrad 4 mit einer angeformten Zahnrad-Lagerhülse 41 drehbeweglich gelagert.

Die einstückig an die Mitnehmer-Scheibe 3 mitangespritzten Lagerhülsen 31 bzw. 32 sind an dem rechten, also der Abtriebsseite mit dem Abtriebszahnrad 51 abgewandten Ende der Antriebswelle 5 mit dieser verbunden und weisen zur Abtriebsseite freie Wandteile auf, über die entsprechende Gegenwandteile der Lagerhülsen 21 bzw. 41 des Getriebegehäuses 2 bzw. des Zahnrades 4 steckbar sind und somit eine einfach montierbare und raumsparende, unter allen Betriebsbedingungen sicher arbeitende Getriebekonstruktion ergeben.

**Patentansprüche**

1. Getriebeanordnung, insbesondere Schneckengetriebeanordnung, mit einer in einem Getriebegehäuse (2) gelagerten Abtriebswelle (5), die über eine an dieser befestigte konzentrische Mitnehmer-Scheibe (3) in elastischer Drehmitnahmeverbindung mit einem Zahnrad (4) steht, das von einer in das Getriebegehäuse (2) ragenden Antriebswelle (Schneckenwelle 7) angetrieben wird, wobei die Mitnehmer-Scheibe (3) mit einer ersten Lagerhülse (31) zur Lagerung der Abtriebswelle (5) im Getriebegehäuse (2) und einer zweiten Lagerhülse (32) zur Lagerung des Zahnrades (4) auf der Mitnehmer-Scheibe (3) derart ausgebildet sind, daß die erste bzw. zweite Lagerhülse (31 bzw.32) an dem der Abtriebsseite abgewandten Ende der Abtriebswelle (5) mit dieser und untereinander verbunden und über zur Abtriebsseite der Abtriebswelle (5) gerichtete, axial offene Wandteile der ersten bzw. zweiten Lagerhülse (31 bzw.32) entsprechende, in Gegenrichtung axial offene Lagerhülsen (21 bzw.41) des Getriebegehäuses (2) bzw. des Zahnrades (4) übergesteckt sind, dadurch gekennzeichnet, daß die Mitnehmer-Scheibe (3) aus einem an die Abtriebswelle (5) angespritzten einstückigen Kunststoff-Gußteil besteht und die Lagerhülsen (31 bzw.32 ; 21 bzw.41) konzentrisch zueinander in einer Ebene radial unterhalb des Eingriffpunktes der Antriebswelle (Schneckenwelle 7) angeordnet sind.

2. Getriebeanordnung nach Anspruch 1, dadurch gekennzeichnet, daß die Abtriebswelle (5) im Bereich der ersten Lagerhülse (31) mit axial und/oder tangential verlaufenden Außennuten (52, 53 bzw.54) versehen ist.

3. Getriebeanordnung nach Anspruch 1 oder 2, gekennzeichnet durch die Verwendung einer Stahl-Abtriebswelle und/oder eines Kunststoff-Zahnrades.

**Claims**

1. A gear mechanism, in particular a worm gear unit, having an output shaft (5) mounted in a gear housing (2) and elastically connected through a driving disc fixed concentrically thereon in rotation-transmitting relationship with a gear wheel (4) driven by a driving shaft (worm shaft 7) that projects into the gear housing (2), the driving disc (3) being formed with a first bearing sleeve (31) for mounting the output shaft (5) in the gear housing (2) and a second bearing sleeve (32) for mounting the gear wheel (4) on the driving disc (3), the first and second bearing sleeves (31, 32 respectively) being connected, at the end of the output shaft (5) facing away from the output side, with this shaft and with one another and being pushed over bearing sleeves (21, 41) of the gear housing (2) and gear wheel (4) respectively which face towards the output end of the output shaft (5), correspond to axially open parts of the wall of the first and second bearing sleeves (31, 32) respectively and are axially open in the opposite direction, characterised in that the driving disc (3) consists of a casting of plastics material injection-moulded integrally on to the output shaft (5) and the bearing sleeves (31, 32 ; 21, 41 respectively) are arranged concentrically in one plane radially below the point of engagement of the drive shaft (worm shaft 7).

2. A gear mechanism according to claim 1, characterised in that the output shaft (5) is provided in the region of the first bearing sleeve (31) with axial and/or tangential external grooves (52, 53 ; 54 respectively).

3. A gear mechanism according to claim 1 or claim 2, characterised by the use of a steel output shaft and/or a gear wheel of plastics material.

**Revendications**

1. Dispositif de transmission, notamment dispositif de transmission à vis sans fin, comportant un arbre mené (5) monté dans un carter de transmission (2) et relié, selon une liaison élastique d'entraînement en rotation, par l'intermédiaire d'un disque concentrique d'entraînement (3), fixé à cet arbre, à une roue dentée (4) qui est entraînée par l'arbre moteur (arbre 7 de la vis) qui pénètre dans le carter de transmission (2), et dans lequel le disque d'entraînement (3) muni d'un premier coussinet de support (31) destiné à supporter l'arbre mené (5) dans le carter de transmission (2) et d'un second coussinet de support (32) servant à supporter la roue dentée (4) sur le disque d'entraînement (3) est agencé de telle sorte que les premier et second coussinets de support (31 et 32) sont reliés à l'arbre mené (5), sur l'extrémité de ce dernier située à l'opposé du côté mené, et sont reliés entre eux, et sont emmanchés par-dessus des coussinets de support (21 et 41) du carter de transmission (2) et de la roue dentée (4), qui sont dirigés vers le côté mené de l'arbre mené (5), correspondent à des éléments de paroi ouverts axialement des premier et second coussinets de support (31 et 32) et s'ouvrant axialement dans la direction opposée, caractérisé par le fait que le disque d'entraînement (3) est constitué par une pièce monobloc en matière plastique moulée par injection sur l'arbre mené (5) et que les coussinets de support (31 ou 32 ; 21 ou 41) sont disposés concentriquement l'un par rapport à l'autre de manière à s'étendre dans un plan en étant disposés, du point de vue radial, au-dessous du point d'attaque de l'arbre d'entraînement (arbre 7 de la vis).

2. Dispositif de transmission suivant la revendication 1, caractérisé par le fait que l'arbre mené (5) comporte, dans la zone du premier coussinet de support (31), des gorges extérieures (52, 53 ou 54) axiales et/ou tangentielles.

3. Dispositif de transmission suivant la revendication 1 ou 2, caractérisé par l'utilisation d'un arbre mené en acier et/ou d'une roue dentée en matière plastique.

FIG 1

FIG 2